# EUROPEAN PATENT APPLICATION

(11) **EP 2 390 988 A2**
(43) Date of publication of application: **30.11.2011**
(21) Application number: 11168088.0
(22) Date of filing: 30.05.2011
(51) Int. Cl.: H02K 5/04

(54) **Molded motor and mobile body therewith**

(30) Priority: 31.05.2010 JP 2010124656; 28.04.2011 JP 2011101347
(71) Applicant: Sanyo Electric Co., Ltd., Osaka 570-8677 (JP)
(72) Inventor: Nagao, Takeshi, Moriguchi City, Osaka 570-8677 (JP); Taguchi, Kenji, Moriguchi City, Osaka 570-8677 (JP); Sagara, Hiroaki, Moriguchi City, Osaka 570-8677 (JP)
(74) Representative: Glawe, Delfs, Moll

(57) **Abstract**

A molded motor having a stator having an annular stator core coated with molding resin has a motor case which joins the stator. The motor case has a rib portion formed at the outer circumference of the junction face between the motor case and the stator.

## Description

### BACKGROUND OF THE INVENTION

### 1. Field of the Invention

The present invention relates to a molded motor in which an annular stator core having a coil portion is coated with molding resin. The present invention also relates to a mobile body, such as an electric vehicle, incorporating such a molded motor.

### 2. Description of Related Art

In recent years, there have been developed molded motors in which an annular stator core (stator) having a coil portion (wound lead) is coated with molding resin. Inside the stator core so coated with the molding resin, a rotor is disposed. According to one conventional technology related to such molded motors, brackets (cases) are provided one at each end in the axial direction of the molding resin in which the stator core is molded.

Inconveniently, however, in the conventional molded motor mention above, brackets are provided at each end in the axial direction of the molding resin, and the molding resin joins the brackets over faces that are substantially perpendicular to the axis. The junction faces between the molding resin and the brackets are, at their edge, directly exposed outside the motor, and lead to the space inside the molding resin where a permanent magnet (rotor) is disposed. As a result, if the contact between the molding resin and the brackets at the junction faces is insufficient, water may enter across the junction faces. This may produce rust and cause corrosion inside the molded motor, leading to motor failure.

Thus, in a case where a molded motor is used in an environment where it is exposed to moisture, it is necessary to somehow prevent entry of water into the molded motor. On the other hand, there have been developed electric vehicles that use as a source of driving force a molded motor in which a stator core is coated with molding resin. In such applications, since electric vehicles have to run in rain and on wet roads, much care is taken to make molded motors water-resistant.

### SUMMARY OF THE INVENTION

The prevent invention has been made against the background discussed above, and an object of the invention is to provide a molded motor that offers enhanced reliability as a result of reduced entry of water into the motor achieved with improved water-resistance at the junction face between a stator, including a stator core and molding resin, and a motor case. Another object of the invention is to provide a highly reliable mobile body, such as an electric vehicle, that is provided with such a molded motor.

To achieve the above objects, according to one aspect of the invention, a molded motor having a stator having an annular stator core coated with molding resin is provided with a motor case which joins the stator, and the motor case has a rib portion formed at the outer circumference of the junction face between the motor case and the stator. Here, the rib portion may be any wall-like structure so long as it serves to prevent entry of water.

In the molded motor structured as described above, the junction face between the motor case and the stator may be formed as a core junction face between the motor case and the stator core, and the rib portion may be formed at the outer circumference of the core junction face.

In the molded motor structured as described above, the junction face between the motor case and the stator may be provided with a core junction face between the motor case and the stator core and a resin junction face between the motor case and the molding resin, with the resin junction face provided outward of the core junction face in the motor radial direction, and with the rib portion provided at the outer circumference of the resin junction face.

In the molded motor structured as described above, there may be further provided a functional portion at a predetermined position at the outer circumference of the motor case, and the rib portion and the functional portion may cover the outer circumference of the junction face between the motor case and the stator.

In the molded motor structured as described above, the rib portion and the functional portion may cover the outer circumference of the junction face between the motor case and the stator all around the circumference.

In the molded motor structured as described above, the functional portion may be a screw-fastening portion for screw-fastening the motor case to another component or a terminal holding portion for holding a terminal plate on a side face of the motor case.

In the molded motor structured as described above, the functional portion may include a resin accommodation portion which is provided outward of the part of the motor case corresponding to the rib portion in the motor radial direction and accommodates the molding resin and a wall portion which is provided at the outer circumference of the resin accommodation portion and continuously connects to the rib portion.

In the molded motor structured as described above, the functional portion may be provided with an auxiliary rib portion which is set at a height lower than the height of the rib portion.

In the molded motor structured as described above, the rib portion may extend from the junction face in the rotation axis direction.

In the molded motor structured as described above, at least part of the inner circumferential face of the rib portion is in contact with the outer circumferential face of the stator core.

In the molded motor structured as described above, part of the molding resin may be located outward of the outer circumferential face of the rib portion.

In the molded motor structured as described above, part of the molding resin may be located inward of the inner circumferential face of the rib portion.

In the molded motor structured as described above, the rib portion may be provided in such a way as to cover the entire outer circumferential face of the stator core with respect to the rotation axis direction.

In the molded motor structured as described above, the rib portion may be provided in such a way as to cover part of the outer circumferential face of the stator core with respect to the rotation axis direction.

According to another aspect of the invention, a mobile body, such as an electric vehicle, incorporates a molded motor as described above.

Here, the concept "mobile body" encompasses not only electric vehicles such as electric bicycles, motorcycles (two-wheeled motorized vehicles), three-wheeled motorized vehicles, and four-wheeled motorized vehicles but also watercraft such as motorboats, amusement cars, boats, and other vehicles, and any vehicles that use a motor as their driving power source and that move unmanned, that is, with no man aboard.

### BRIEF DESCRIPTION OF THE DRAWINGS

Fig. 1 is a right side view showing an example of an electric vehicle as a mobile body incorporating a molded motor according to a first embodiment of the invention;
Fig. 2 is a vertical sectional view, as seen from the front, of and around the rear wheel of the electric vehicle shown in Fig. 1;
Fig. 3 is a perspective view of and around the molded motor shown in Fig. 2;
Fig. 4 is a perspective view of and around the molded motor in Fig. 3, with some components dismounted;
Fig. 5 is a right side view of and around the molded motor shown in Fig. 2;
Fig. 6 is a vertical sectional view, as seen from the front, of the molding resin, and the outer case of the motor case, of the molded motor shown in Fig. 5;
Fig. 7 is a left side view of the molded motor shown in Fig. 5, showing the stator core assembled in the motor case;
Fig. 8 is a perspective view of the outer case of the molded motor shown in Fig. 5,
Fig. 9 is a partly enlarged horizontal sectional view, as seen from the top, of the molding resin and the outer case shown in Fig. 6, showing a terminal holding portion and a part around it;
Fig. 10 is a partly enlarged horizontal sectional view, as seen from the top, of the molding resin and the outer case shown in Fig. 6, showing a screw-fastening portion and a part around it;
Fig. 11 is a partly enlarged vertical sectional view, as seen from the front, of the molding resin and the outer case shown in Fig. 6;
Fig. 12 is a partly enlarged vertical sectional view, as seen from the front, of the molding resin and the outer case of a molded motor according to a second embodiment of the invention; and
Fig. 13 is a partly enlarged vertical sectional view, as seen from the front, of the molding resin and the outer case of a molded motor according to a third embodiment of the invention

### DETAILED DESCRIPTION OF PREFERRED EMBODIMENTS

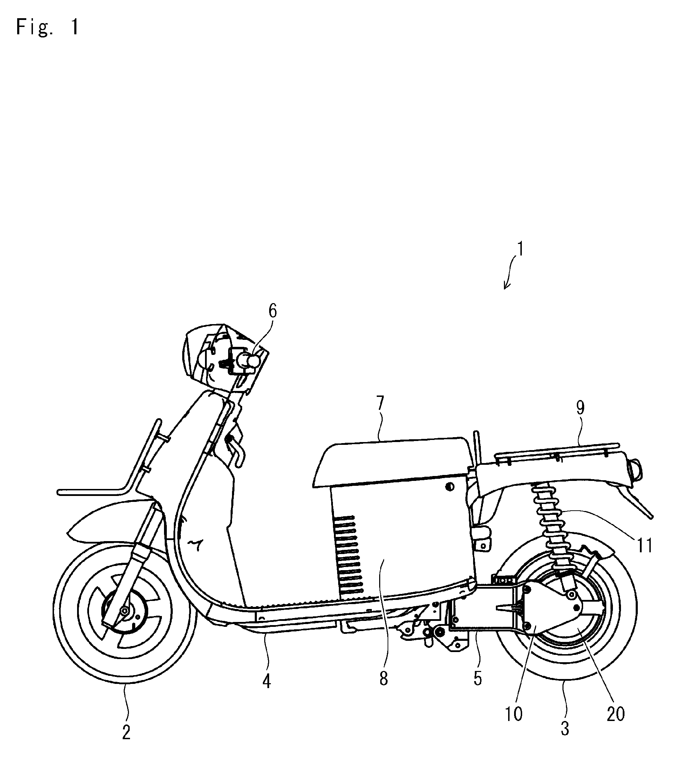

Hereinafter, embodiments of the present invention will be described with reference to Figs. 1 to 13.

First, the construction of an electric vehicle as a mobile body incorporating a molded motor according to a first embodiment of the invention will be described with reference to Fig. 1. Fig. 1 is a right side view of an example of an electric vehicle incorporating a molded motor.

As shown in Fig. 1, the electric vehicle 1 is a motorcycle having a front wheel 2 and a rear wheel 3. The electric vehicle 1 is built around a main frame 4 and a swing arm 5 as main skeletal members.

The main frame 4 is, in a front-end part thereof, bent upward, and, in the front-end part, steerably supports the front wheel 2 and a handle 6. On a rear-end side of the main frame 4, substantially in a central part of the electric vehicle 1 in its front/rear direction, there are provided a seat 7 on which the driver seats and a battery housing 8. The battery housing 8 is provided under the seat 7, and houses a battery (not shown) inside. The seat 7 also serves as a lid to the battery housing 8, and is openably fitted to the battery housing 8. At the rear of the seat 7 on the main frame 4, over the rear wheel 3, there is provided a luggage rack 9.

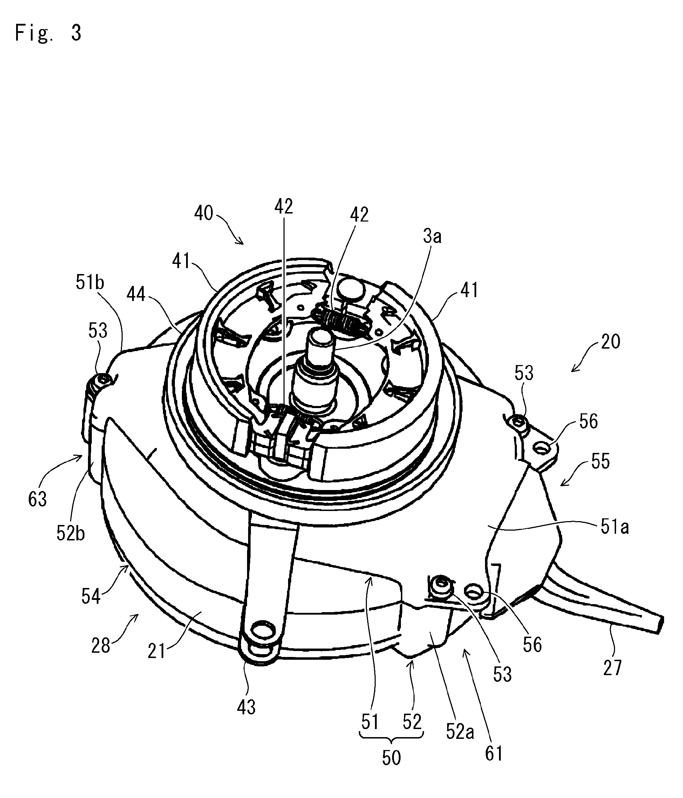

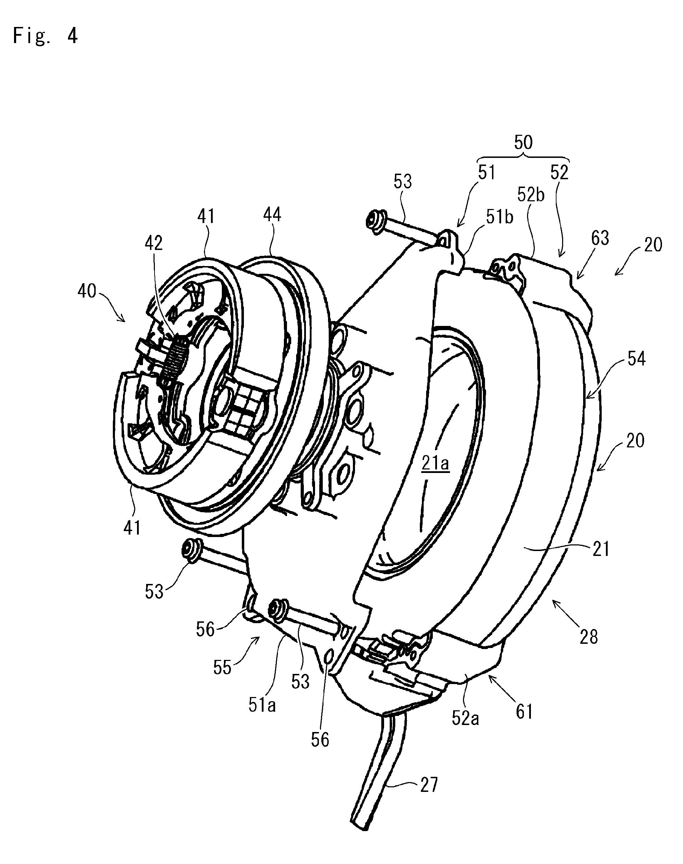

The swing arm 5 extends rearward from a rear part of the main frame 4 under the seat 7 and the battery housing 8. The rear wheel 3 is supported on a rear end of the swing arm 5. The swing arm 5 is provided only on the left side of the rear wheel 3, and supports the rear wheel 3 in an open-at-one-side fashion. The rear wheel 3 is a driven wheel, and between it and the swing arm 5, there is provided a molded motor 20 which drives the rear wheel 3. The swing arm 5 is, at its rear end, coupled to a coupling portion 55 (described later; see Figs. 3 and 4) provided in a front end part of the molded motor 20; the swing arm 5 thus serves as a supporting member which supports the rear wheel 3 via the molded motor 20. On the left side of the molded motor 20, there is provided a suspension case 10. From the suspension case 10 up toward the luggage rack 9, a suspension unit 11 for the rear wheel 3 extends.

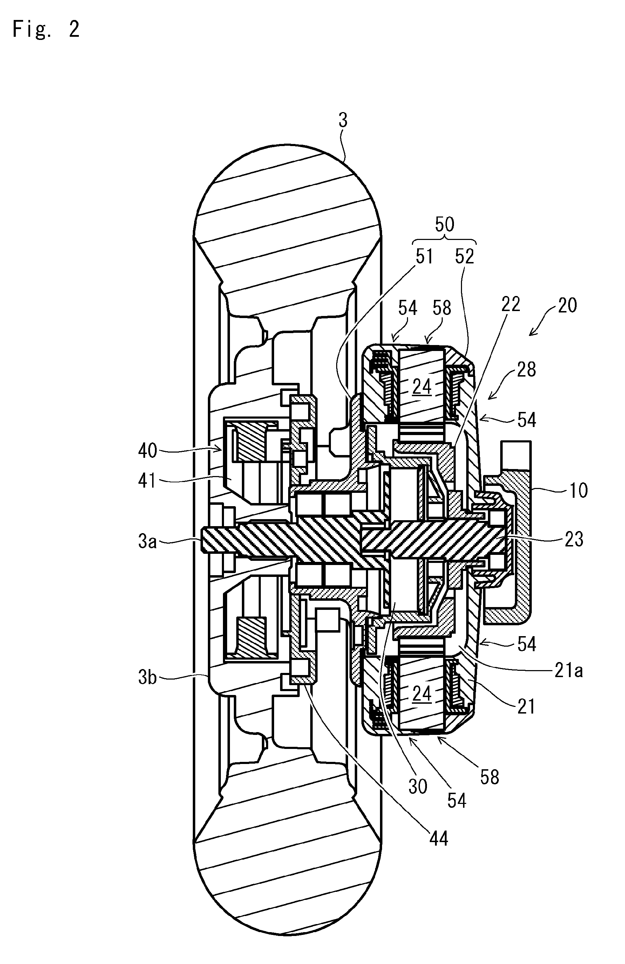

Next, the construction of and around the rear wheel 3 of the electric vehicle 1 will be described with reference to, in addition to Fig. 1, Figs. 2 to 4. Fig. 2 is a vertical sectional view, as seen from the front, of and around the rear wheel of the electric vehicle. Fig. 3 is a perspective view of and around the molded motor shown in Fig. 2. Fig. 4 is a perspective view of and around the molded motor, with some components dismounted. In Fig. 4, the rotor and the reduction mechanism inside the molded motor are omitted from illustration.

As shown in Fig. 2, provided at the rear wheel 3 of the electric vehicle 1 are, in order from far to near with respect to the rear wheel 3, that is, from right to left in Fig. 2, the suspension case 10, the molded motor 20, a reduction mechanism 30, a braking mechanism 40, and the rear wheel 3. The molded motor 20, the braking mechanism 40, and the rear wheel 3 are disposed coaxially.

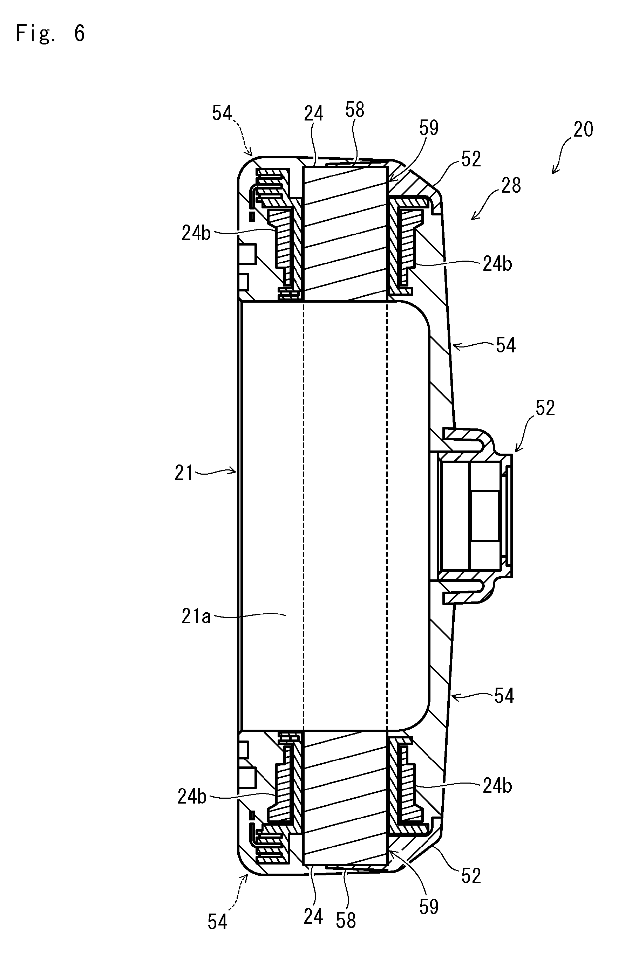

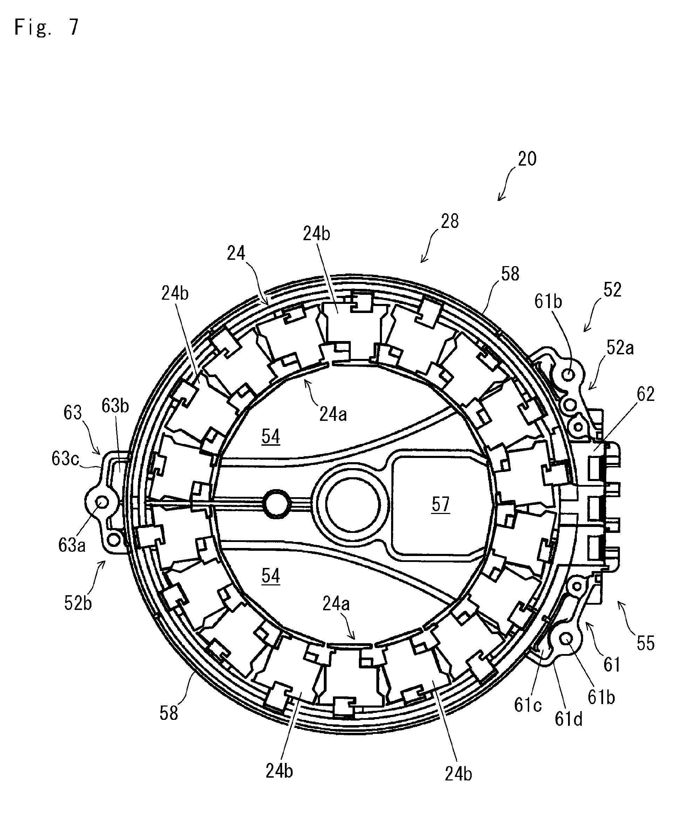

As shown in Figs. 1, 3, and 4, the molded motor 20 is a motor for electric vehicles which has a stator 28 having an annular stator core 24 (see Figs. 6 and 7) coated with electrically insulating molding resin 21 as will be described later. The molded motor 20 is exposed to be in direct contact with the atmosphere. Moreover, the molded motor 20 has the axes of the stator core 24 and the stator 28 aligned with the axle 3a of the rear wheel 3, and is disposed close to the rear wheel 3.

As shown in Fig. 2, inside the molding resin 21, there is provided a rotor 22, which is the rotor of the motor. The rotor 22 is disposed with its axis aligned with the axis of the stator core 24, and is fixed to a motor shaft 23 which is rotatably provided. Thus, as the molded motor 20 is driven, the rotor 22 rotates, and the driving force is transmitted to the motor shaft 23.

The reduction mechanism 30 is disposed between the motor shaft 23 and the axle 3a. The reduction mechanism 30 includes, for example, a planet gear mechanism.

The braking mechanism 40 is disposed near the hub 3b of the rear wheel 3, and is a so-called drum-type brake. As shown in Figs. 3 and 4, the braking mechanism 40 includes a brake shoe 41, a spring 42, a brake arm 43, and a brake cover 44. The brake shoe 41 is disposed inside the hub 3b. When the braking mechanism 40 is inoperative, the brake shoe 41 is kept away from the hub 3b, inward of it in the radial direction, by the action of the spring 42. As the brake arm 43 rotates, the brake shoe 41 is expanded outward in the radial direction with respect to the axle 3a against the resilience of the spring 42. The brake shoe 41 then produces friction between it and a drum (not shown) which rotates along with the hub 3b, and thereby brakes the rotation of the hub 3b, and hence the rear wheel 3.

The part of the hub 3b where the brake shoe 41 is disposed is fitted with the brake cover 44 as a lid so that dust and the like may not enter the inside (see Fig. 2). The brake cover 44 has, in addition to the function of keeping dust out of the braking mechanism 40, also the function of protecting the brake members such as the brake shoe 41, the spring 42, and the brake arm 43.

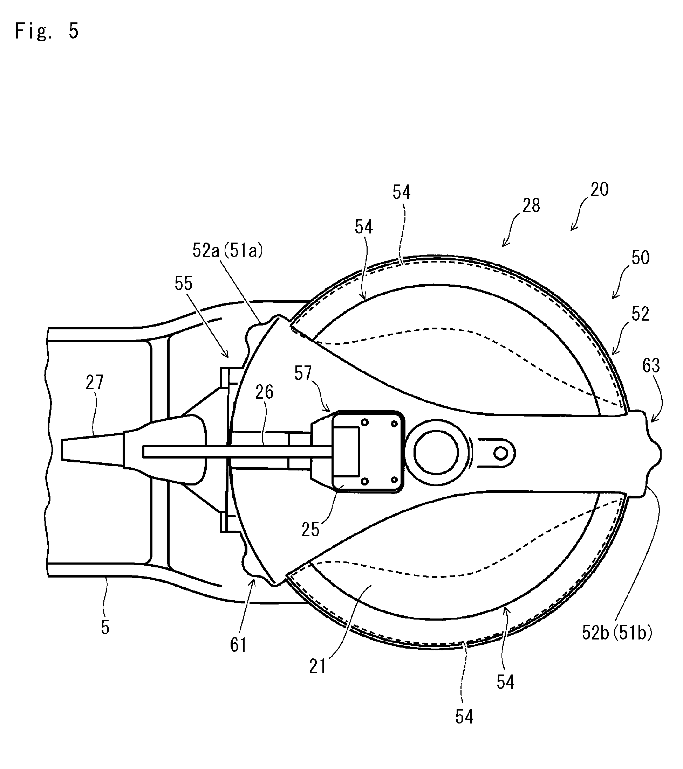

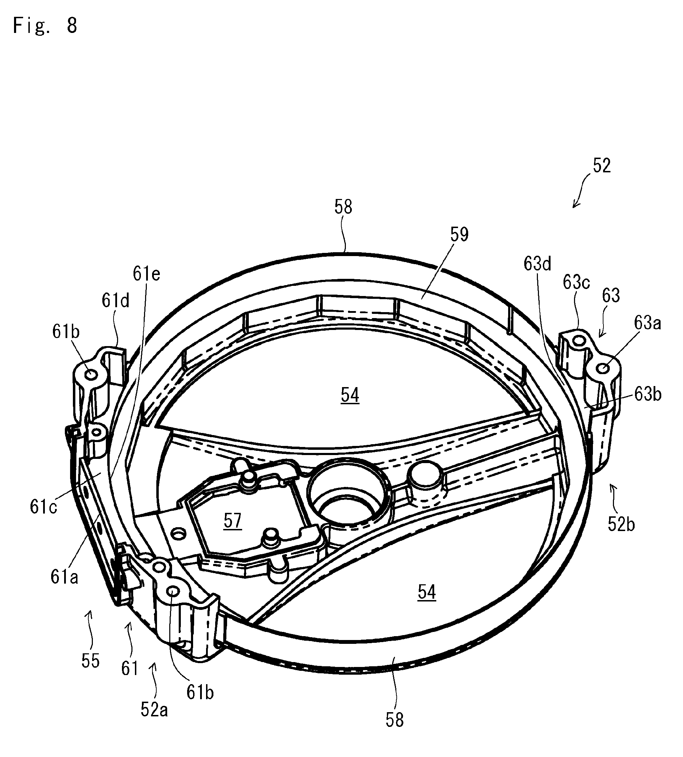

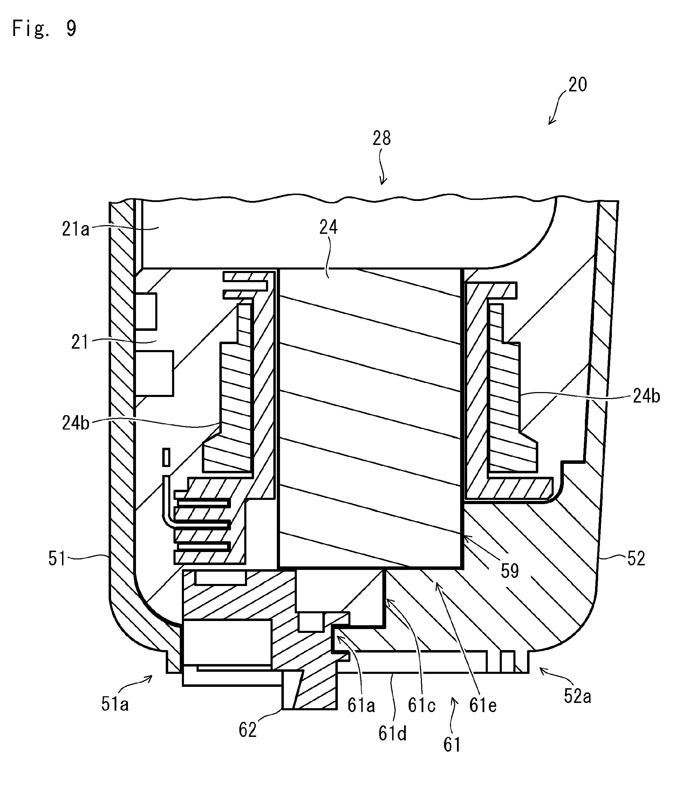

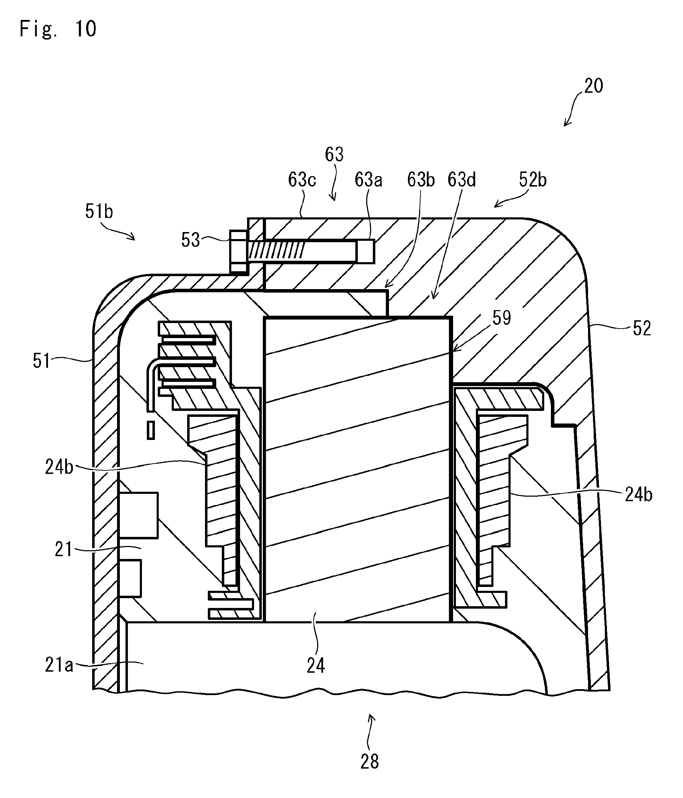

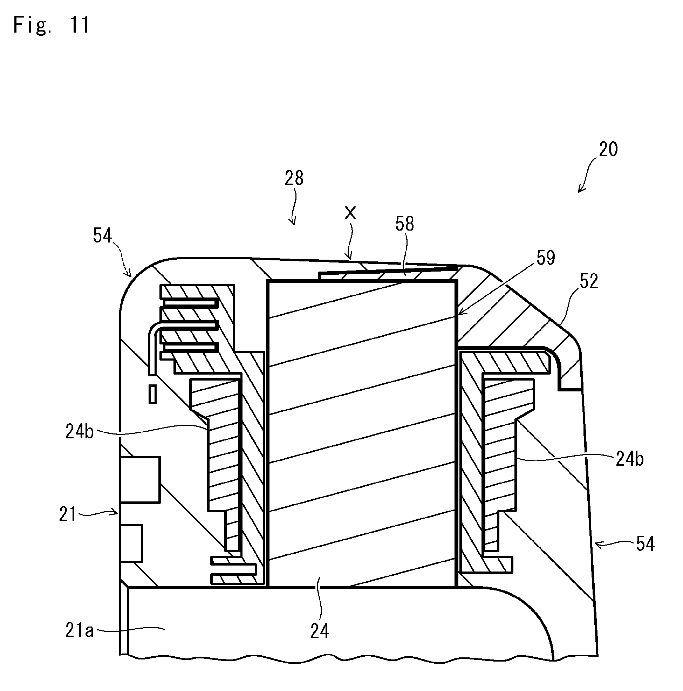

Next, the structure of the molded motor 20 will be described in detail with reference to, in addition to Figs. 2 to 4, Figs. 5 to 11. Fig. 5 is a right side view of and around the molded motor. Fig. 6 is a vertical sectional view, as seen from the front, of the molding resin and the outer case of the motor case of the molded motor. Fig. 7 is a left side view of the molded motor, showing the stator core assembled in the motor case. Fig. 8 is a perspective view of the outer case of the molded motor. Fig. 9 is a partly enlarged horizontal sectional view, as seen from the top, of the molding resin and the outer case, showing a terminal holding portion and a part around it. Fig. 10 is a partly enlarged horizontal sectional view, as seen from the top, of the molding resin and the outer case, showing a screw-fastening portion and a part around it. Fig. 11 is a partly enlarged vertical sectional view, as seen from the front, of the molding resin and the outer case.

The molded motor 20 includes, out of the components already mentioned, the stator 28 having the stator core 24 covered with the molding resin 21, the rotor 22, and the motor shaft 23, and in addition a motor case 50, a circuit board 25, signal leads 26, and power leads 27.

The stator core 24 is annular in shape (ring-shaped), and, as shown in Figs. 6 and 7, has a coil portion 24a disposed in a part thereof inward in the radial direction. The coil portion 24a includes a plurality of coils 24b. The coils 24b project inward in the radial direction of the stator core 24, and are disposed one next to the other all around the stator core 24 in the circumferential direction thereof. The stator 28 is formed by covering the circumference of the stator core 24, including the coil portion 24a, with the insulating molding resin 21. The molding resin 21 is formed of, for example, a thermosetting resin containing glass fiber.

In a part of the stator core 24 inward of the coil portion 24a in the radial direction, a recess 21a is formed in the molding resin 21 so as to be receded from the rear wheel 3 side. The recess 21a is cylindrical in shape, and inside the recess 21a, the rotor 22 is disposed (see Fig. 2).

The motor case 50 is formed of metal such as an alloy of aluminum, and is so disposed as to hold the stator 28 inside. Specifically, the motor case 50 is composed of two plate-shaped case members which are disposed to hold between them the molding resin 21 of the stator 28, that is, an inner case 51 shown in Fig. 4 and an outer case 52 shown in Fig. 8. As shown in Fig. 2, the inner case 51 is disposed on the rear wheel 3 side, and the outer case 52 is disposed on the opposite side from the rear wheel 3, that is, on the suspension case 10 side.

As shown in Figs. 3 and 4, the inner case 51 has, in end parts thereof, a front-side coupling portion 51 a and a rear-side coupling portion 51b, both tongue-shaped; the outer case 52 has, in end parts thereof, a front-side coupling portion 52a and a rear-side coupling portion 52b, both tongue-shaped. The front-side coupling portion 51 a and the front-side coupling portion 52a are disposed on the front side of the molded motor 20, and the rear-side coupling portion 51b and the rear-side coupling portion 52b are disposed on the rear side of the molded motor 20. As shown in Figs. 3 and 4, the inner case 51 and the outer case 52 are coupled together at their end parts by fastening together the corresponding coupling portions, that is, between the front-side coupling portion 51 a and the front-side coupling portion 52a and between the rear-side coupling portion 51b and the rear-side coupling portion 52b, with three bolts 53, with the molding resin 21 held inside.

Here, the motor case 50 is provided with a mechanical element, referred to as a functional portion, to allow the molded motor 20 to be assembled and the power leads to be connected. The functional portion is embodied by, for example, a terminal holding portion 61 and a screw-fastening portion 63, which will be described below.

The terminal holding portion 61 as a functional portion is provided at the front-side coupling portion 52a of the outer case 52 shown in Figs. 7 to 9. As shown in Fig. 8, the terminal holding portion 61 has an opening 61a which communicates between the inside and the outside of the outer case 52 in the motor radial direction, and there a terminal plate 62 (see Figs. 7 and 9) is fitted. The terminal plate 62 is used to electrically connect between the coil portion 24a of the stator 28 and the power leads 27. Moreover, the terminal holding portion 61 has two screw holes 61b for coupling together the outer case 52 and the inner case 51 by fastening them together with screws. Through the screw holes 61b, bolts 53 are inserted and fastened. To allow for the provision of the terminal plate 62 and the screw holes 61b, the terminal holding portion 61 projects outward of the outer case 52 in the motor radial direction, and is provided with a resin accommodation portion 61c into which the molding resin 21 intrudes and a wall portion 61d provided at the outer circumference of the resin accommodation portion 61c to cover it.

On the other hand, the screw-fastening portion 63 as a functional portion is provided at the rear-side coupling portion 52b of the outer case 52 shown in Figs. 7, 8, and 10. The screw-fastening portion 63 has a screw hole 63a for coupling together the outer case 52 and the inner case 51 by fastening them with a screw. Through the screw hole 63a, a bolt 53 is inserted and fastened. To allow for the provision of the screw hole 63a, the screw-fastening portion 63 projects outward of the outer case 52 in the motor radial direction, and is provided with a resin accommodation portion 63b into which the molding resin 21 intrudes and a wall portion 63c provided at the outer circumference of the resin accommodation portion 63b to cover it.

The motor case 50 has, elsewhere than where the above-mentioned coupling portions are provided, four openings 54, through which the stator 28 is partly exposed and more specifically the molding resin 21 is partly exposed. This keeps part of the molding resin 21 in direct contact with the atmosphere. Thus, the heat of the molded motor 20 can be rejected via the part of the molding resin 21 exposed through the openings 54.

Moreover, as shown in Figs. 3 to 5, the motor case 50 has, in a front-end part thereof, a coupling portion 55. The coupling portion 55 has two screw holes 56 (see Figs. 3 and 4) for screw-fastening using bolts and nuts, and, as shown in Fig. 5, the rear end of the swing arm 5 is connected to the coupling portion 55 by screw-fastening so as to support the entire molded motor 20. Of the three bolts 53 described previously which couple together the inner case 51 and outer case 52, two are provided one at each end of the front-side coupling portion 51 a and the front-side coupling portion 52a, which are the longer in the circumferential direction, and one is provided in a rear-end part of the rear-side coupling portion 51b and the rear-side coupling portion 52b, which are the shorter in the circumferential direction (see Figs. 3 and 4).

On the side of the motor case 50 opposite from the rear wheel 3, that is, on the outer side of the motor case 50, as shown in Fig. 5, there is provided a circuit board housing portion 57 on the surface of the outer case 52. The circuit board housing portion 57 is disposed in a front region on the inner case 51, and houses the circuit board 25 inside.

To the circuit board 25, the signal leads 26 are connected for exchange of control signals. Between the two screw holes 56 in the coupling portion 55 of the motor case 50, the power leads 27 are connected for supply of electric power to the molded motor 20. The signal leads 26 and the power leads 27 extend from the coupling portion 55 outward in the radial direction of the molded motor 20, that is, frontward along the swing arm 5.

The motor case 50 has a rib portion 58 shown in Figs. 6, 8, and 11 formed on the outer case 52. Here, the rib portion 58 may be any wall-like structure so long as it serves to prevent entry of water. The rib portion 58 is provided in a part of the outer case 52 corresponding to the outer side of the circumferential face of the stator core 24 (stator 28). The outer case 52 has a junction face 59 which is perpendicular to the rotation axis and over which the outer case 52 and the stator 28 are kept in contact for arrangement of the stator core 24. The junction face 59 is formed as a core junction face between the outer case 52 and the stator core 24. The rib portion 58 extends from the junction face 59 in the rotation axis direction toward the side where the stator core 24 is disposed. This gives a complicated structure to the junction face 59 between, on one side, the stator core 24 and the molding resin 21 of the stator 28 and, on the other side, the outer case 52, that is, the core junction face between the stator core 24 and the outer case 52, and makes the path from the outer edge of the junction face 59 into the motor comparatively long. This makes it difficult for water to enter the motor across the junction face 59 between, on one side, the stator core 24 and the molding resin 21 of the stator 28 and, on the other side, the outer case 52.

Thus, the terminal holding portion 61 and the screw-fastening portion 63 as functional portions and in addition the rib portion 58 cover the junction face 59 between the outer case 52 and the stator 28 all around its outer circumference. In this way, in a case where the outer case 52 is provided with a functional portion which is a component necessary for the molded motor 20, this functional portion and the rib portion 58 cover the outer circumference of the junction face between the outer case 52 and the stator 28. Moreover, all around the molded motor 20, the junction face 59 between the outer case 52 and the stator 28 is given a complicated structure, and the path from the outer edge of the junction face 59 into the motor is made comparatively long. Thus, with the construction provided with the terminal holding portion 61, the screw-fastening portion 63, and the rib portion 58, it is possible to make it more difficult for water to enter the motor across the junction face 59 between the outer case 52 and the stator 28.

Moreover, the terminal holding portion 61 is provided with the resin accommodation portion 61c and the wall portion 61d, the screw-fastening portion 63 is provided with the resin accommodation portion 63b and the wall portion 63c, and the rib portion 58 continuously connects to the wall portion 61d and the wall portion 63c. As shown in Figs. 7 and 8, the resin accommodation portion 61c and the resin accommodation portion 63b are provided outward of the part corresponding to the rib portion 58 in the motor radial direction. Thus, in the terminal holding portion 61 and the screw-fastening portion 63, the region where the molding resin 21 is present outward of the stator core 24 in the motor radial direction is larger than where the rib portion 58 is provided. This makes the path across the junction face 59 between the stator 28 and the outer case 52 into the motor comparatively long, and makes it possible to make it more difficult for water to enter the motor across the junction face 59.

Moreover, as shown in Figs. 8 and 9, the terminal holding portion 61 is provided with an auxiliary rib portion 61 e which is set at a height lower than the height of the rib portion 58 relative to the junction face 59 in the rotation axis direction. The resin accommodation portion 61c of the terminal holding portion 61 is provided in a region outward (to the left in Fig. 9) of the top edge of the auxiliary rib portion 61e in Fig. 9 in the motor radial direction. According, as shown in Fig. 9, in the terminal holding portion 61, the junction face 59 between the stator 28 and the outer case 52 has a complicated structure like stairs.

Likewise, as shown in Figs. 8 and 10, the screw-fastening portion 63 is provided with an auxiliary rib portion 63d which is set at a height lower than the height of the rib portion 58 relative to the junction face 59 in the rotation axis direction. The resin accommodation portion 63b of the screw-fastening portion 63 is provided in a region outward (to the right in Fig. 10) of the top edge of the auxiliary rib portion 63d in Fig. 10 in the motor radial direction. Accordingly, as shown in Fig. 10, in the screw-fastening portion 63, the junction face 59 between the stator 28 and the outer case 52 has a complicated structure like stairs.

In this way, the junction face 59 between the stator 28 and the outer case 52 is given a more complicated structure, and the path from the outer edge of the junction face into the motor is made longer. This makes it possible to make it still more difficult for water to enter the motor across the junction face 59 between the stator 28 and the outer case 52.

Moreover, the rib portion 58 is provided in such a way as to cover part of the outer circumferential face of the stator core 24 with respect to the rotation axis direction, that is, the left/right direction in Figs. 6 and 11. This, compared with covering the entire outer circumferential face of the stator core 24 with respect to the rotation axis direction, helps save the material, for example aluminum, of the part of the outer case 52 used as the rib portion 58 and still enhance the effect of reducing entry of water into the motor across the molding resin 21 between, on one side, the outer case 52 and, on the other side, the stator core 24 and the molding resin 21.

Moreover, part of the inner circumferential face of the rib portion 58 is in contact with the outer circumferential face of the stator core 24. This improves water resistance at the junction face 59 between, on one side, the outer case 52 and, on the other side, the stator core 24 and the molding resin 21, and in addition makes the positioning of the stator core 24 easy. Specifically, the stator core 24 fits into the rib portion 58 in such a way that the outer circumferential face of the former makes contact with the inner circumferential face of the latter, and this makes it possible to position the stator core 24 with respect to the outer case 52 in the radial direction.

On the other hand, as shown in Fig. 11, where the rib portion 58 is provided (part X in Fig. 11), the molding resin 21 is so molded that part of it is located outward of the outer circumferential face of the rib portion 58. This makes more complicated the structure of the junction face 59 between, on one side, the outer case 52 and, on the other side, the stator core 24 and the molding resin 21, and makes it even more difficult for water to enter the motor. Moreover, since the inner circumferential face of the rib portion 58 is in contact with the outer circumferential face of the stator core, this construction improves the contact between the rib portion 58 and the stator core 24.

Thus, with the construction described above, it is possible to improve water resistance at the junction face 59 between the stator 28, including the stator core 24 and the molding resin 21, and the outer case 52, and thereby reduce entry of water into the motor. It is thus possible to suppress development of rust inside the molded motor 20. Consequently, it is possible to suppress failure due to internal corrosion, and thus to provide a molded motor 20 with higher reliability. Moreover, it is possible to provide a highly reliable electric vehicle 1 provided with such a molded motor 20.

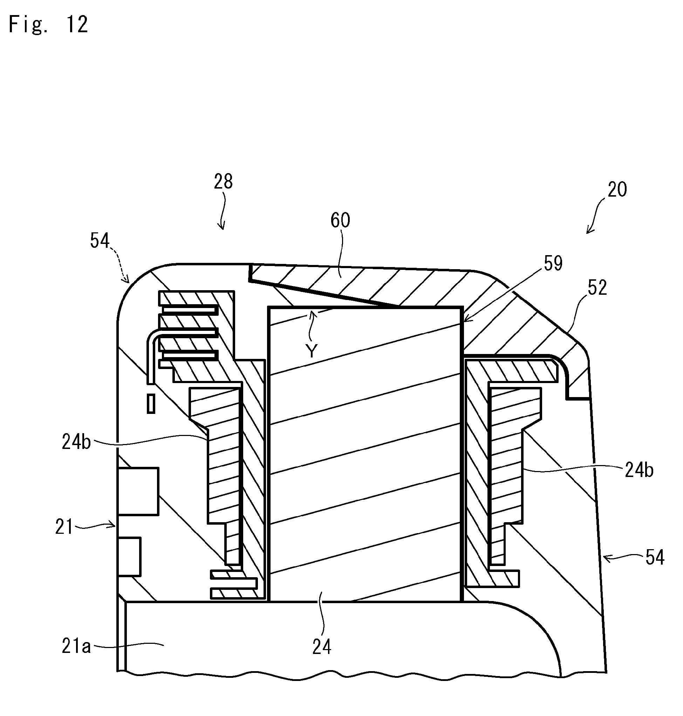

Next, the structure of a molded motor according to a second embodiment of the invention will be described in detail with reference to Fig. 12. Fig. 12 is a partly enlarged vertical sectional view, as seen from the front, of the molding resin and the outer case of the molded motor. The structure in this embodiment is basically the same as that in the first embodiment described previously with reference to Figs. 1 to 11, and therefore no overlapping illustration or description will be given again with respect to elements and features common to the first embodiment.

In the molded motor 20 according to the second embodiment, the motor case 50 is provided with, on the outer case 52, a rib portion 60 shown in Fig. 12. Here, the rib portion 60 may be any wall-like structure so long as it serves to prevent entry of water. The rib portion 60 is provided in such a way as to cover the entire outer circumferential face of the stator core 24 with respect to the rotation axis direction, that is, the left/right direction in Fig. 12. This further enhances the effect of reducing entry of water into the motor across the junction face 59 between, on one side, the outer case 52 and, on the other side, the stator core 24 and the molding resin 21.

On the other hand, where the rib portion 60 is provided (part Y in Fig. 12), the molding resin 21 is so molded that part of it is located inward of the inner circumferential face of the rib portion 60. This improves the contact between the rib portion 60, the molding resin 21, and the stator core 24, and makes it more difficult for water to enter the motor.

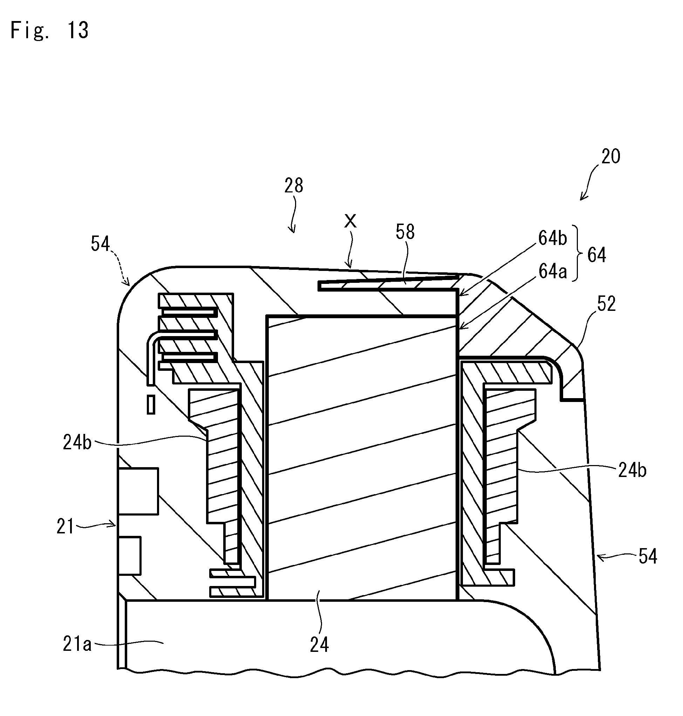

Next, the structure of a molded motor according to a third embodiment of the invention will be described in detail with reference to Fig. 13. Fig. 13 is a partly enlarged vertical sectional view, as seen from the front, of the molding resin and the outer case of the molded motor. The structure in this embodiment is basically the same as that in the first embodiment described previously with reference to Figs. 1 to 11, and therefore no overlapping illustration or description will be given again with respect to elements and features common to the first embodiment.

In the molded motor 20 according to the third embodiment, the motor case 50 is provided with, on the outer case 52, a junction face 64 between the outer case 52 and the stator 28 shown in Fig. 13. The junction face 64 between the outer case 52 and the stator 28 is provided with a core junction face 64a between the outer case 52 and the stator core 24 and a resin junction face 64b between the outer case 52 and the molding resin 21. The resin junction face 64b is provided outward of the core junction face 64a in the motor radial direction, and the rib portion 58 is provided at the outer circumference of the resin junction face 64b. Thus, part of the molding resin 21 is located outward of the stator core 24 in the motor radial direction, and the rib portion 58 is located further outward. This makes the path from the outer edge of the junction face 64 to the stator core 24 and into the motor comparatively long. It is thus possible to make it more difficult for water to enter the stator core 24 and the motor across the junction face 64 between the outer case 52 and the stator 28.

Between the outer circumferential face of the stator core 24 and the inner circumferential face of the rib portion 58, at part of the circumference, a positioning member (not shown) is provided. The stator core 24 fits in in such a way that the outer circumferential face of the stator core 24 makes contact with the inside of the positioning member, and this makes it possible to position the stator core 24 with respect to the outer case 52 in the radial direction.

It should be understood that the embodiments by way of which the present invention has been described hereinabove are in no way meant to limit the scope of the invention; the invention allows for many modifications and variations within the scope not departing from the spirit of the invention.

For example, although the embodiments deal with a motorcycle as shown in Fig. 1 as an example of an electric vehicle as a mobile body incorporating a molded motor 20, such a molded motor may be incorporated in any type of electric vehicle other than two-wheeled motorized vehicles; it may be incorporated in three-wheeled and four-wheeled motorized vehicles.

The mobile bodies in which a molded motor 20 according to the invention can be incorporated further include watercraft such as motorboats, amusement cars, boats, and other vehicles, and any vehicles that use a motor as their driving power source and that move unmanned, that is, with no man aboard.

The range over which the rib portion 58 or 60 covers the outer circumferential face of the stator core 24 with respect to the rotation axis direction is not limited to that specifically mentioned in the above embodiments; so long as it is formed all around the circumference in the circumferential direction (except where functional portions such as the terminal holding portion 61 and the screw-fastening portion 63 are provided), the range of its coverage with respect to the rotation axis direction, that is, the height of the rib portion 58 or 60 relative to the junction face 59 or 64 in the rotation axis direction, may be changed as desired.

## Claims

1. A molded motor having a stator having an annular stator core coated with molding resin, comprising:
a motor case which joins the stator, wherein
the motor case has a rib portion formed at an outer circumference of a junction face between the motor case and the stator.

2. The molded motor according to claim 1, wherein
the junction face between the motor case and the stator is formed as a core junction face between the motor case and the stator core, and
the rib portion is formed at an outer circumference of the core junction face.

3. The molded motor according to claim 1, wherein
the junction face between the motor case and the stator is provided with a core junction face between the motor case and the stator core and a resin junction face between the motor case and the molding resin,
the resin junction face is provided outward of the core junction face in a motor radial direction, and
the rib portion is provided at an outer circumference of the resin junction face.

4. The molded motor according to any one of claims 1 to 3, further comprising:
a functional portion at a predetermined position at an outer circumference of the motor case, wherein
the rib portion and the functional portion cover the outer circumference of the junction face between the motor case and the stator.

5. The molded motor according to claim 4, wherein
the rib portion and the functional portion cover the outer circumference of the junction face between the motor case and the stator all around the circumference.

6. The molded motor according to claim 4 or 5, wherein
the functional portion is a screw-fastening portion for screw-fastening the motor case to another component or a terminal holding portion for holding a terminal plate on a side face of the motor case.

7. The molded motor according to any one of claims 4 to 6, wherein
the functional portion includes a resin accommodation portion which is provided outward of a part of the motor case corresponding to the rib portion in a motor radial direction and accommodates the molding resin and a wall portion which is provided at an outer circumference of the resin accommodation portion and continuously connects to the rib portion.

8. The molded motor according to any one of claims 4 to 7, wherein
the functional portion is provided with an auxiliary rib portion which is set at a height lower than a height of the rib portion.

9. The molded motor according to any one of claims 1 to 8,
wherein the rib portion extends from the junction face in a rotation axis direction.

10. The molded motor according to any one of claims 1 to 9,
wherein at least part of an inner circumferential face of the rib portion is in contact with an outer circumferential face of the stator core.

11. The molded motor according to any one of claims 1 to 10,
wherein part of the molding resin is located outward of an outer circumferential face of the rib portion.

12. The molded motor according to any one of claims 1 to 11,
wherein part of the molding resin is located inward of an inner circumferential face of the rib portion.

13. A mobile body comprising the molded motor according to any one of claims 1 to 12.
